(19) Europäisches Patentamt
European Patent Office
Office européen des brevets

(11) **EP 3 741 910 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(21) Anmeldenummer: **19176038.8**

(22) Anmeldetag: **22.05.2019**

(51) Int Cl.:
*D06N 3/18* *(2006.01)*     *D06N 3/00* *(2006.01)*
*D06N 3/10* *(2006.01)*     *D06N 3/14* *(2006.01)*
*D06N 3/12* *(2006.01)*     *B31F 1/28* *(2006.01)*
*D03D 11/00* *(2006.01)*

(54) **TROMMELBELAG FÜR EINE ANTRIEBSTROMMEL**

DRUM LINING FOR A DRIVE DRUM

REVÊTEMENT DE TAMBOUR POUR UN TAMBOUR D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.11.2020 Patentblatt 2020/48**

(73) Patentinhaber: **Mühlen Sohn GmbH & Co. KG**
**89134 Blaustein (DE)**

(72) Erfinder:
• **Der Erfinder hat auf sein Recht verzichtet, als solcher bekannt gemacht zu werden.**

(74) Vertreter: **Jakelski & Althoff**
**Patentanwälte PartG mbB**
**Patentanwälte**
**Partnerschaftsgesellschaft**
**Mollenbachstraße 37**
**71229 Leonberg (DE)**

(56) Entgegenhaltungen:
**EP-A2- 0 168 684     WO-A1-2007/122708**

• **DATABASE WPI Week 199605 Thomson Scientific, London, GB; AN 1996-045719 XP002795396, -& JP H07 310290 A (SOKO SEIREN KK) 28. November 1995 (1995-11-28)**

## Beschreibung

Die vorliegende Erfindung betrifft einen Trommelbelag für eine Antriebstrommel einer Wellpappenmaschine.

Stand der Technik

Wellpappenmaschinen weisen Obergurte und Untergurte auf, welche die Wellpappe durch die Wellpappenmaschine transportieren. Antriebstrommeln dienen der Kraftübertragung auf die Obergurte und Untergurte. Um eine optimale Kraftübertragung von einer Antriebstrommel zum Gurt zu gewährleisten, werden die Antriebstrommeln, die auch als Antriebswalzen bezeichnet werden, mit einem Trommelbelag versehen. Daraus resultiert ein minimaler Gurtschlupf, um die Kraftübertragung zu optimieren und den Verschleiß der Gurte zu minimieren. Dies erhöht die Wirtschaftlichkeit der Wellpappenmaschine. Trommelbeläge besitzen eine Haltbarkeit von 3 bis 5 Jahren und werden üblicherweise fest auf die Antriebstrommeln verklebt. Zum Austausch der Beläge werden die Antriebstrommeln innerhalb der Produktionslinie der Wellpappenmaschine bearbeitet und belegt. Während dieser zeitaufwendigen Arbeiten, muss die Wellpappenmaschine außer Betrieb genommen werden. Beim Austausch der Beläge treten außerdem zum Teil Verletzungsrisiken durch mechanische Arbeiten oder auch gesundheitliche Risiken durch die Verwendung von lösungsmittelhaltigen Klebern auf.

Die WO 2018/001395 A1 beschreibt einen selbstspannenden Trommelbelag für eine Antriebstrommel einer Wellpappenmaschine. Dieser weist ein bei Erwärmung reversibel schrumpfendes, textiles Trägermaterial auf. Er besteht aus zwei rechteckigen Bändern, die jeweils an einer Schmalseite mit einem konvex deltoidförmigen Bereich verbunden sind. Um die Antriebstrommel mit dem Trommelbelag zu versehen, wird die Mittelachse des konvex deltoidförmigen Bereiches entlang der Umfangsmittelachse der Antriebstrommel angeordnet. Dort wird sie mittels Fixiernieten gesichert. Dann wird die Antriebstrommel so gedreht, dass die Bänder spiralförmig um die Antriebstrommel gewickelt werden. Sie werden an ihren Enden abgeschnitten und dort mittels weiterer Fixiernieten an der Antriebstrommeloberfläche befestigt. Bei prozessbedingter Temperaturerhöhung in der Wellpappenmaschine erfährt der Trommelbelag eine Schrumpfung, die ihn spannt. Bei Abkühlung kehrt er durch das reversible Schrumpfungsverhalten in seine Ursprungsform zurück, sodass er einfach von der Antriebstrommel entfernt werden kann. Diese Selbstspannung stellt eine innovative Lösung dar, einen Trommelbelag ohne feste Verklebung auf eine Antriebstrommel zu befestigten. Allerdings müssen die Bediener hierzu eine ungewohnte Methode zum Belegen der Antriebstrommel anwenden.

Es ist auch bekannt, gummierte Antriebstrommeln zu verwenden. Nachdem die Gummierung verschlissen ist, muss allerdings die gesamte Antriebstrommel ausgetauscht werden.

Die JP H03-310290 A beschreibt ein Anti-Rutsch-Material. Dieses weist einen Träger auf, der auf einer Seite mit einer porösen Polyurethanmembran und auf der anderen Seite mit einem Acrylharz beschichtet ist.

In der WO 2007/122708 A1 wird beschrieben, dass ein Harz mit einer Glasübergangstemperatur im Bereich von -50°C bis 20°C als Formtrennmittel verwendet werden kann, um in einem Heißpressverfahren hergestellte Artikel einfach aus einer Form zu lösen.

Eine Aufgabe der vorliegenden Erfindung besteht darin, einen Trommelbelag bereitzustellen, der schnell und mit geringem Gefahrenpotential auf die Antriebstrommel einer Wellpappenmaschine aufgebracht und wieder von dieser entfernt werden kann. Dabei sollte das Aufbringen in einer Weise erfolgen, die dem Aufbringen herkömmlich verklebter Trommelbeläge auf eine Antriebstrommel gleicht und es somit nicht erfordert, dass ein Bediener der Wellpappenmaschine neue Arbeitsmethoden erlernen muss.

Offenbarung der Erfindung

Diese Aufgabe wird durch einen Trommelbelag für eine Antriebstrommel einer Wellpappenmaschine gelöst, welcher zumindest drei Schichten aufweist. Eine textile Trägerschicht, insbesondere eine textile Gewebeschicht, fungiert als Substrat des Trommelbelages. Auf einer ersten Seite weist die textile Trägerschicht eine erste Beschichtung auf und auf einer zweiten Seite weist die textile Trägerschicht eine zweite Beschichtung auf. Die erste Seite ist dazu vorgesehen, gurtseitig an der Antriebstrommel angeordnet zu werden. Die zweite Seite ist dazu vorgesehen, trommelseitig an der Antriebstrommel angeordnet zu werden. Die erste Beschichtung dient also dazu, ein Abrutschen des Obergurts oder des Untergurts von der Antriebstrommel zu verhindern. Auf diese Weise wird eine optimale Kraftübertragung zwischen der Antriebstrommel und dem jeweiligen Gurt gewährleistet. Die zweite Beschichtung soll verhindern, dass der Trommelbelag sich von der Oberfläche der Antriebstrommel ablöst. Diese Aufgabe wird bei herkömmlichen Trommelbelägen durch eine auf die Trommeloberfläche aufgebrachte Klebstoffschicht gelöst, welche den Trommelbelag fest mit der Antriebstrommel verklebt.

Der Erfindung liegt die Erkenntnis zugrunde, dass diese Aufgabe auch durch eine auf die textile Trägerschicht aufgebrachte zweite Beschichtung gelöst werden kann, welche eine Glasübergangstemperatur im Bereich von - 20°C bis 60°C aufweist. Bevorzugt liegt sie im Bereich von 0°C bis 50°C besonders bevorzugt im Bereich von 10°C bis 40°C. Ein Polymer geht beim Überschreiten seiner Glasübergangstemperatur von einem festen in einen gummiartigen bis zähflüssigen Zustand über. Die Ermittlung der Glasübergangstemperatur kann insbesondere mittels dynamischer Differenzthermoanlayse (differential scanning calorimetry; DSC) ermittelt werden. Hierbei wird die Wärmekapazität des Beschichtungsmaterials in Abhängigkeit von seiner Temperatur erfasst. Die Wärmekapazitäten oberhalb und unterhalb der Glasübergangstemperatur unterscheiden sich, wobei in der Nähe der Glasübergangstemperatur ein kontinuierlicher Übergang erfolgt. Die Messmethode wird in der Norm DIN EN ISO 11357-2:2014-07 beschrieben.

Die üblicherweise in einer Werkshalle vorherrschende Umgebungstemperatur liegt in der Nähe der Glasübergangstemperatur der zweiten Beschichtung. Hierdurch weist diese ein gewisse Klebrigkeit auf, durch welche der Trommelbelag im Stillstand der Wellpappenmaschine mittels der zweiten Beschichtung auf die Antriebstrommel aufgeheftet werden kann und in seiner Position verbleibt ohne, dass hierzu ein zusätzlicher Klebstoff verwendet werden müsste. Vielmehr sollte erfindungsgemäß sogar auf die Verwendung eine solchen Klebstoffes verzichtet werden. Die Klebrigkeit der zweiten Beschichtung ist bei dieser Temperatur jedoch gering genug, um den Trommelbelag mitsamt der zweiten Beschichtung wieder rückstandsfrei von der Antriebstrommel abziehen zu können ohne hierzu scharfe Werkzeug zu Hilfe nehmen zu müssen. Ein Absinken der Umgebungstemperatur so deutlich unter die Glasübergangstemperatur, dass ein Anhaften des Trommelbelags an der Antriebstrommel nicht mehr gewährleistet wäre, kommt unter normalen Arbeitsbedingungen nicht vor. Würde der Trommelbelag eine zweite Beschichtung aufweisen, welche auch im Betrieb der Wellpappenmaschine die genannte geringe Klebrigkeit aufweist, so würde dies unter den erheblichen mechanischen Belastungen durch den Obergurt oder Untergurt zu einer Ablösung des Trommelbelages von der Antriebstrommel führen. Die erfindungsgemäß verwendete zweite Beschichtung hat jedoch den Vorteil, dass sie sich im Betrieb der Wellpappenmaschine deutlich über ihre Glasübergangstemperatur hinaus erwärmt. Dadurch nimmt ihre Zähigkeit und Klebrigkeit dermaßen zu, dass eine Ablösung des Trommelbelages von der Antriebstrommel ausgeschlossen ist. Nach Abschalten und Abkühlen der Wellpappenmaschine ist dieser Vorgang jedoch vollständig reversibel. Durch die Abkühlung der zweiten Beschichtung nimmt ihre Klebrigkeit ab, sodass ein abgenutzter Trommelbelag problemlos ausgetauscht werden kann.

Um eine zweite Beschichtung mit der erforderlichen Glasübergangstemperatur bereitzustellen, ist es bevorzugt, dass die zweite Beschichtung zumindest ein Polymer enthält, das ausgewählt ist aus der Gruppe bestehend aus Polyacrylaten, Acrylatcopolymeren, Acrylatterpolymeren, Kautschuken, Silikonen, Polyurethanen und Gemischen daraus. Polyacrylate, Acrylatcopolymere und Acrylatterpolymere sind hierbei besonders bevorzugt. Dabei ist das Polymer so auszuwählen, dass die erforderliche Glasübergangstemperatur der zweiten Beschichtung erreicht wird. Beispielsweise sind vulkanisierte Kautschuke bekannt, die eine sehr hohe Glasübergangstemperatur aufweisen und als Beschichtung für gummierte Antriebstrommeln verwendet werden können, jedoch für die zweite Beschichtung ungeeignet wären. Auch unterscheidet sich beispielsweise die Glasübergangstemperatur von Polyacrylaten in Abhängigkeit von der Länge ihrer Seitenkette erheblich. Mit einem Polyacrylat mit sehr kurzen Seitenketten, wie beispielsweise Polymethylmethacrylat (PEMA), welches eine Glasübergangstemperatur im Bereich von 100°C bis 120°C aufweist, könnte allein keine zweite Beschichtung erhalten werden, welche für den erfindungsgemäßen Trommelbelag geeignet ist.

Wenn die erforderliche Glasübergangstemperatur der zweiten Beschichtung durch ein Homopolymer nicht erreicht wird, so können bei der Herstellung der zweiten Beschichtung weitere Bestandteile copolymerisiert werden, um die Glasübergangstemperatur der Beschichtung so zu modifizieren, dass sie im gewünschten Bereich liegt. Bevorzugt wird das Polymer hierbei durch Copolymerisation von Acrylsäure oder einem Salz der Alkylsäure mit einem N-Vinyllactam oder einem N-Vinylsäureamid sowie mit mindestens einem Alkylvinylether hergestellt.

Die Mengenmischung der Monomeren kann dabei insbesondere gemäß der Fox-Gleichung so gewählt werden, dass sich die gewünschte Glasübergangstemperatur $T_G$ des Copolymeren oder Terpolymeren ergibt:

$$\frac{1}{T_G} = \sum_n \frac{w_n}{T_{G,n}}$$

Hierin repräsentiert n die Laufzahl über die eingesetzten Monomere, $W_n$ den Massenanteil des jeweiligen Monomers n in Gewichtsprozent und $T_{G,n}$ die jeweilige Glasübergangstemperatur des Homopolymers aus den jeweiligen Monomeren n. Die Fox-Gleichung wird in T.G. Fox, Bull. Am. Phys. Soc. 1956, 1, 123 beschrieben.

Auch wenn im Betrieb der Wellpappenmaschine ein deutliches Überschreiten der Glasübergangstemperatur der zweiten Beschichtung wünschenswert ist um deren Klebrigkeit zu erhöhen, sollte auf der anderen Seite vermieden werden, dass es zu einer Verflüssigung der zweiten Beschichtung kommt durch welche sich die textile Trägerschicht von der Antriebstrommel ablösen könnte. Üblicherweise werden Wellpappenmaschinen bei Betriebstemperaturen im Bereich von 80°C bis 120°C betrieben. Es können jedoch auch kurzfristige Spitzentemperaturen von bis zu 150°C erreicht werden. Um einen hinreichen Abstand zwischen den im Betrieb einer Wellpappenmaschine auftretenden Temperaturen und der Schmelztemperatur der zweiten Beschichtung zu gewährleisten, ist es deshalb bevorzugt, dass die Schmelztemperatur der zweiten Beschichtung mindestens 180°C beträgt.

Die Dicke der zweiten Beschichtung sollte nicht zu gering sein, um im Betrieb der Wellpappenmaschine eine sichere Verklebung des Trommelbelags mit der Antriebstrommel zu gewährleisten. Andererseits sollte sie auch nicht zu dick sein, damit die von der Antriebstrommel auf den Obergurt oder Untergurt zu übertragende Kraft nicht zu einem zu großen Anteil durch Scherungen innerhalb der zweiten Beschichtung aufgenommen wird. Es wurde gefunden, dass eine bevorzugte Dicke der zweiten Beschichtung im Bereich von 0,1 mm bis 0,5 mm liegt. Weiterhin liegt ein Flächengewicht der zweiten Beschichtung vorzugsweise im Bereich von 300 g/m² bis 500 g/m².

Durch die Klebrigkeit der zweiten Beschichtung auch bei Raumtemperatur besteht die Gefahr, dass an dieser im unverbauten Zustand des Trommelbelages Verschmutzungen anhaften können. An den Stellen, an denen Schmutzpartikel auf der zweiten Beschichtung anhaften, würde dann bei Aufbringen des Trommelbelags auf die Antriebstrommel keine sichere Verklebung mehr zwischen der zweiten Beschichtung und der Antriebstrommeloberfläche erfolgen. Es ist deshalb bevorzugt, dass auf der zweiten Beschichtung eine Abdeckschicht aufgebracht ist. Diese schützt die zweite Beschichtung vor Verunreinigungen und kann unmittelbar vor Aufbringen des Trommelbelages auf die Antriebstrommel abgezogen werden. Besonders geeignete Materialien für die Abdeckschicht sind Polyethylen und/oder Polypropylen. Diese können in Form einer Kunststofffolie auf die zweite Beschichtung aufgebracht werden, die zum einen sicher genug auf dieser anhaftet, um ein unbeabsichtigtes Ablösen zu verhindern und auf der anderen Seite unmittelbar vor dem Aufbringen des Trommelbelages auf die Antriebstrommel mit geringem Kraftaufwand von der zweiten Beschichtung entfernt werden kann.

Um ein einfaches Aufbringen des Trommelbelags auf eine Antriebstrommel zu ermöglichen beträgt dessen Dicke bevorzugt maximal 15 mm, besonders bevorzugt maximal 10 mm. Um dennoch eine hinreichende Verschleißfestigkeit des Trommelbelages zu gewährleisten, liegt die Dicke des textilen Trägermaterials bevorzugt im Bereich von 1 mm bis 9 mm, besonders bevorzugt im Bereich von 4 mm bis 7 mm.

Die textile Trägerschicht enthält vorzugsweise Fäden und/oder Fasern aus mindestens einem Polyester.

Die Kombination aus dem textilen Trägermaterial und den beiden Beschichtungsmaterialien wird vorzugsweise so gewählt, dass der Trommelbelag einen Shorehärtegrad A von mehr als 50 aufweist. Dieser kann gemäß der Norm DIN ISO 7619-1 ermittelt werden. Eine so große Härte verleiht dem Trommelbelag eine lange Lebensdauer bei der Verwendung in einer Wellpappenmaschine, sodass ein Austauschen des Trommelbelags, für welches die Wellpappenmaschine stillgelegt werden muss, nur selten erforderlich ist.

Die erste Beschichtung enthält vorzugsweise ein Beschichtungsmaterial, das ausgewählt ist aus der Gruppe bestehend aus Kautschuken, Silikonen, Polyurethanen und Gemischen daraus. Besonders bevorzugt besteht die erste Beschichtung aus diesem Beschichtungsmaterial. Silikone, wie insbesondere Polydimethylsiloxan, sind als Beschichtungsmaterialien besonders bevorzugt. Ganz besonders bevorzugt sind quervernetzte Polydimethylsiloxane. Ausgewählte Vertreter dieser Stoffklassen weisen eine hohe Abriebfestigkeit und einen hohen Reibungskoeffizienten auf, welcher ein Abrutschen des Obergurts oder Untergurts von dem Trommelbelag verhindert.

Die Dicke der ersten Beschichtung liegt vorzugsweise im Bereich von 0,1 mm bis 3,0 mm. Besonders bevorzugt liegt sie im Bereich von 0,5 mm bis 1,5 mm.

Kurze Beschreibung der Zeichnungen

Ein Ausführungsbeispiel der Erfindung ist in den Zeichnungen dargestellt und wird in den nachfolgenden Beschreibungen näher erläutert.

Figur 1 zeigt eine schematische Seitenansicht einer Wellpappenmaschine, deren Antriebstrommeln Trommelbeläge gemäß einem Ausführungsbeispiel der Erfindung aufweisen.

Figur 2 zeigt eine isometrische Darstellung einer Antriebstrommel, die Trommelbeläge gemäß einem Ausführungsbeispiel der Erfindung aufweist.

Figur 3 zeigt eine Querschnittsansicht eines Trommelbelags gemäß einem Ausführungsbeispiel der Erfindung.

Figur 4 zeigt einen Längsschnitt eines textilen Trägermaterials eines Trommelbelags gemäß einem Ausführungsbeispiel der Erfindung.

Ausführungsbeispiel der Erfindung

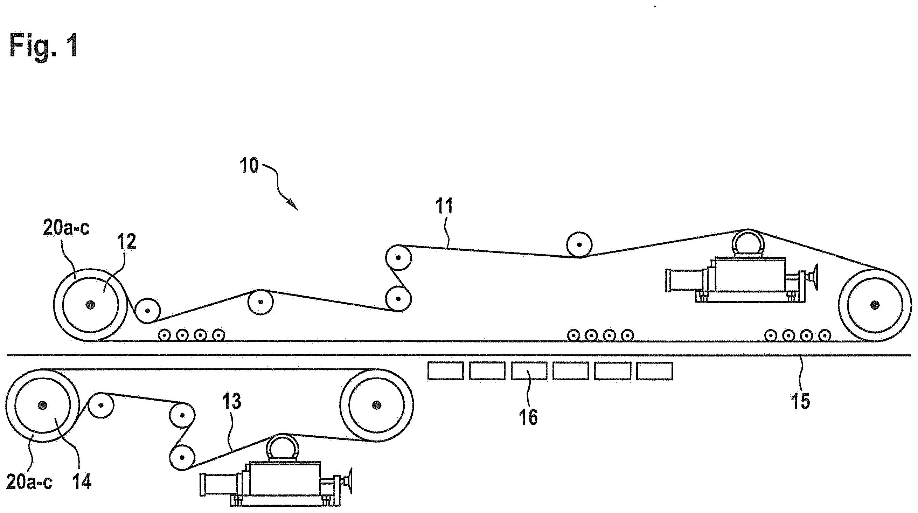

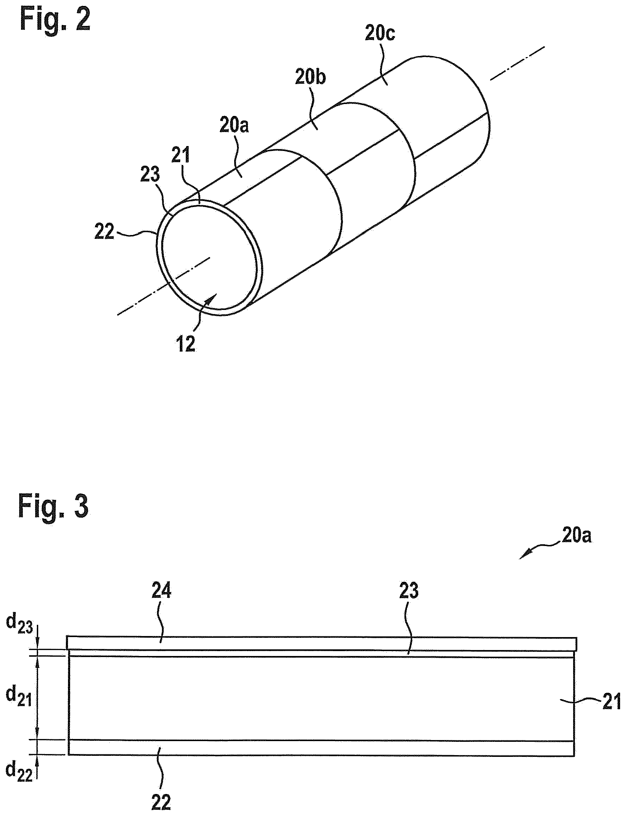

Die wichtigsten Komponenten einer Wellpappenmaschine 10, die Trommelbeläge gemäß einem Ausführungsbeispiel der Erfindung aufweist, sind in Figur 1 dargestellt. Ein Obergurt 11 wird von einer ersten Antriebstrommel 12 angetrieben, die mit drei Trommelbelägen 20a-c gemäß einem Ausführungsbeispiel der Erfindung belegt ist. Ein Untergurt 13 wird von einer zweiten Antriebstrommel 14 angetrieben, die ebenfalls mit drei Trommelbelägen 20a-c gemäß einem Ausführungsbeispiel der Erfindung belegt ist. Zwischen dem Obergurt 11 und dem Untergurt 13 wird mehrlagige Wellpappe 15 über Heizplatten 16 transportiert und die Lagen so miteinander verklebt. Bei den beiden Antriebstrommeln 12, 14 handelt es sich um herkömmliche Stahltrommeln mit einem Durchmesser von 90 cm und einer Länge von 280 cm. Die Trommellänge bestimmt die maximale Breite der in der Wellpappenmaschine 10 transportierbaren Wellpappenbahn 15. Figur 2 zeigt die Anordnung der drei Trommelbeläge 20a-c auf der ersten Antriebstrommel 12. Diese sind jeweils um den Umfang der Antriebstrommel 12 so herum gelegt, dass die beiden Enden jedes der Trommelbeläge 20a bis 20c sich jeweils berühren. Entlang der Längsachse der Antriebstrommel 12 berühren sich die jeweils benachbarten Trommelbeläge 20a-c ebenfalls, sodass die Oberfläche der Antriebstrommel 12 lückenlos von den Trommelbelägen bis 20a-c belegt ist. Jeder der Trommelbeläge 20a-c weißt als Substrat eine textile Trägerschicht 21 auf, die als textile Gewebeschicht ausgeführt ist. Auf der von der Oberfläche der Antriebstrommel 12 abgewandten Seite des Trommelbelages ist die textile Trägerschicht 21 mit einer ersten Beschichtung 22 beschichtet. Auf der der Oberfläche der Antriebstrommel 12 zugewandten Seite der textilen Trägerschicht 21 ist diese mit einer zweiten Beschichtung 23 beschichtet.

Figur 3 zeigt einen Trommelbelag 20a bevor er auf die Antriebstrommel 12 aufgebracht wurde. Die textile Trägerschicht 21 weist eine Dicke $d_{21}$ von 5,5 mm auf. Die erste Beschichtung 22 weist eine Dicke $d_{22}$ von 1,0 mm auf. Die zweite Beschichtung 23 weist ein Dicke $d_{23}$ von 0,3 mm auf. Eine Abdeckschicht 24 in Form einer Polyethylenfolie ist auf die zweite Beschichtung 23 aufgebracht.

Zum Aufbringen des dargestellten Trommelbelages 20a auf die Antriebstrommel 12 wird die Abdeckschicht 24 von der zweiten Beschichtung 23 abgezogen und der Trommelbelag 20a dann so um die Antriebstrommel 12 gewickelt, dass die zweite Beschichtung 23 der Oberfläche der Antriebstrommel 12 zugewandt ist. Im Betrieb der Wellpappenmaschine 10 erhitzt sich die zweite Beschichtung 23, wodurch ihre Klebrigkeit zunimmt. Eine Ablösung des Trommelbelags 20a von der Antriebstrommel 12 ist dadurch ausgeschlossen. Soll der Trommelbelag 20a aufgrund starker Abnutzung von der Antriebstrommel 12 entfernt werden, so wird die Wellpappenmaschine 10 abgeschaltet und gewartet, bis der Trommelbelag 20a und damit auch die zweite Beschichtung 23 sich auf Raumtemperatur abgekühlt haben. Dadurch sinkt die Klebrigkeit der zweiten Beschichtung 23 wieder soweit, dass ein einfaches Ablösen des Trommelbelages 20a von der Antriebstrommel 12 möglich ist. Dieses Ablösen erfolgt, ohne dass Rückstände der zweiten Beschichtung 23 auf der Oberfläche der Antriebstrommel 12 zurückbleiben. Die zweite Beschichtung 23 verbindet sich nämlich fester mit der textilen Trägerschicht 21, als mit der glatten Oberfläche der Antriebstrommel 12. Ohne dass irgendwelche Kleberrückstände von der Oberfläche der Antriebstrommel 12 entfernt werden müssten, kann also sofort ein neuer Trommelbelag auf diese aufgebracht werden und die Wellpappenmaschine 10 anschließend wieder in Betrieb genommen werden. Der Shorehärtegrad A des Trommelbelags 20a beträgt 54, sodass er sich nicht stark abnutzt und nur selten ausgetauscht werden muss.

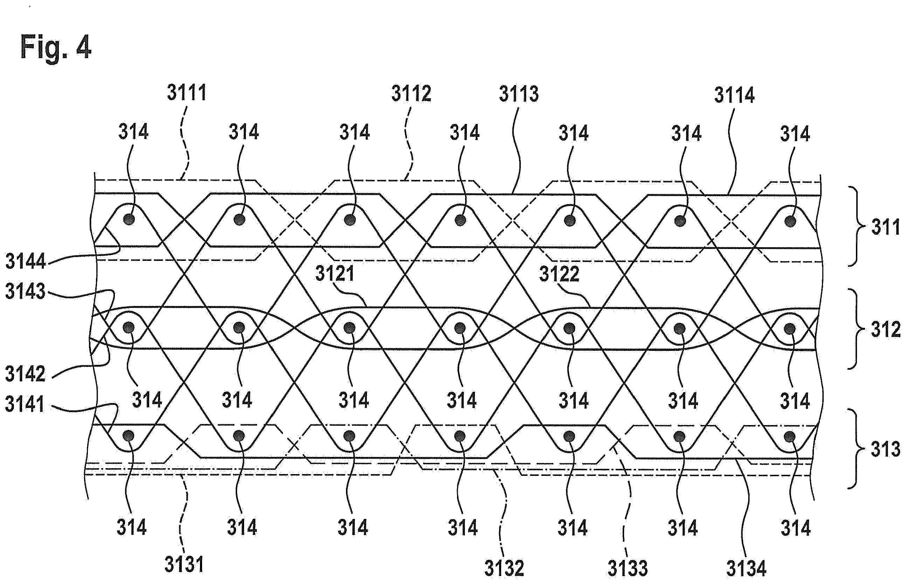

Das Gewebe der textilen Trägerschicht 21 ist in Figur 4 dargestellt. In drei Gewebelagen 311, 312, 313 verlaufen Schussfäden 314, welche aus Polyester bestehen quer zur Längsrichtung des Gewebes. In der oberen Gewebelage 311 sind vier gegeneinander versetzt verlaufende Kettfäden 3111, 3112, 3113, 3114 aus einer Polyester/Viskosemischung vorgesehen, die sowohl nach innen zur mittleren Gewebelage 312 hin als auch nach außen hin über jeweils mindestens zwei Schussfäden 314 laufen. Die mittlere Gewebelage 312 weist zwei zueinander versetzt verlaufende Kettfäden 3121, 3122 aus Polyester auf, die über jeweils zwei Schussfänden 314 laufen. Die untere Gewebelage 313 besteht aus jeweils 4 jeweils versetzt zueinander laufenden Kettfäden 3131, 3132, 3133, 3134 aus der Polyester/Viskosemischung, die nach innen zur mittleren Gewebelage 312 über nur einen Schussfaden 314 und nach außen über zumindest drei Schussfäden 314 laufen. Die drei Gewebelagen 311, 312, 313 sind über Bindefäden 3141, 3142, 3143, 3144 aus der Polyester/Viskosemischung miteinander verwebt. Die Bindefänden sind in jeweils 2 Fadengruppen unterteilt, wobei die eine Fadengruppe bildenden Bindefäden 3143, 3144 zueinander versetzt laufen und die obere Gewebelage 311 an die mittlere Gewebelage 312 binden. Die Bindefäden 3143 und 3144 sind jeweils abwechselnd um einen Schussfaden 314 in der oberen Gewebelage 311 und einem Schussfaden 314 in der der mittleren Gewebelage 312 geführt. In entsprechender Weise bindet die aus den Bindefäden 3141 und 3142 gebildete Fadengruppe die untere Gewebelage 313 an die mittlere Gewebelage 312.

Die erste Beschichtung 22 besteht aus Polydimethylsiloxan mit Füllstoff und Hilfsstoff und Triacedoxyethylsilan-Vernetzer (Elastosil E43 N der Firma Wacker Chemie).

Die zweite Beschichtung 23 besteht aus einem Terpolymeren, das aus Vinylpyrrolidon, Acrylsäure und Vinylethylether in einem Massenverhältnis von 100 : 50 : 350 hergestellt wurde. Die Polymerisation erfolgte im Lösungsmittel Dioxan unter Verwendung von tert.-Butylperpivalat als Initiator gemäß einer in der DE 34 23 446 A1 beschriebenen Synthesevorschrift. Das Terpolymere weist eine Glasübergangstemperatur von 23°C auf. Das Flächengewicht der zweiten Beschichtung 23 beträgt 425 g/m².

Zur Herstellung des Trommelbelages 20a gemäß dem vorliegenden Ausführungsbeispiel der Erfindung wird eine textile Trägerschicht 21 bereitgestellt, die auf einer Seite mit der ersten Beschichtung 22 beschichtet ist. Auf die gegenüberliegende Seite werden 800 g/m² einer wässrigen Dispersion des Beschichtungsmaterials der zweiten Beschichtung 23 aufgebracht. Der Feststoffgehalt dieser wässrigen Dispersion beträgt 53 Gew.-%. Nach verdampfen der Flüssigkeitskomponente der zweiten Beschichtung 23, wird diese mit der Abdeckschicht 24 belegt. Der Trommelbelag 20a liegt nun in einer transportfähigen Form vor, in der ein unbeabsichtigtes Anhaften von Verschmutzungen an der zweiten Beschichtung 23 vermieden wird.

## Patentansprüche

1. Trommelbelag (20a-c) für eine Antriebstrommel (12, 14) einer Wellpappenmaschine (10), aufweisend eine textile Trägerschicht (21), die auf einer ersten Seite eine erste Beschichtung (22) und auf einer zweiten Seite eine zweite Beschichtung (23) aufweist, wobei die zweite Beschichtung (23) eine Glasübergangstemperatur gemäß DIN EN ISO 11357-2:2014-07 im Bereich von - 20°C bis 60°C aufweist.

2. Trommelbelag (20a-c) nach Anspruch 1, **dadurch gekennzeichnet, dass** die zweite Beschichtung (23) zumindest ein Polymer enthält, das ausgewählt ist aus der Gruppe, bestehend aus Polyacrylaten, Acrylatcopolymeren, Acrylatterpolymeren, Kautschuken, Silkonen, Polyurethanen und Gemischen daraus.

3. Trommelbelag (20a-c) nach Anspruch 2, **dadurch gekennzeichnet, dass** das Polymer durch Copolymerisation von Acrylsäure oder einem Salz der Alkylsäure mit einem N-Vinyllactam oder einem N-Vinylsäureamid sowie mit mindestens einem Alkylvinylether hergestellt wurde.

4. Trommelbelag (20a-c) nach einem der Ansprüche 1 bis 3, **dadurch gekennzeichnet, dass** die zweite Beschichtung (23) eine Schmelztemperatur von mindestens 180°C aufweist.

5. Trommelbelag nach einem der Ansprüche 1 bis 4, **dadurch gekennzeichnet, dass** die zweite Beschichtung (23) eine Dicke ($d_{23}$) im Bereich von 0,1 mm bis 0,5 mm aufweist.

6. Trommelbelag (20a-c) nach einem der Ansprüche 1 bis 5, **dadurch gekennzeichnet, dass** die zweite Beschichtung (23) ein Flächengewicht im Bereich von 300 $g/m^2$ bis 500 $g/m^2$ aufweist.

7. Trommelbelag (20a-c) nach einem der Ansprüche 1 bis 6, **dadurch gekennzeichnet, dass** auf der zweiten Beschichtung (23) eine Abdeckschicht (24) aufgebracht ist.

8. Trommelbelag (20a-c) nach einem der Ansprüche 1 bis 7, **dadurch gekennzeichnet, dass** er einen Shorehärtegrad A gemäß DIN ISO 7619-1 von mehr als 50 aufweist.

9. Trommelbelag (20a-c) nach einem der Ansprüche 1 bis 8, **dadurch gekennzeichnet, dass** die textile Trägerschicht (21) Fäden und/oder Fasern aus mindestens einem Polyester enthält.

10. Trommelbelag (20a-c) nach einem der Ansprüche 1 bis 9, **dadurch gekennzeichnet, dass** die textile Trägerschicht (21) eine Dicke ($d_{21}$) im Bereich von 1 mm bis 9 mm aufweist.

11. Trommelbelag (20a-c) nach einem der Ansprüche 1 bis 10, **dadurch gekennzeichnet, dass** die erste Beschichtung (22) zumindest ein Beschichtungsmaterial enthält, das ausgewählt ist aus der Gruppe, bestehend aus Kautschuken, Silkonen, Polyurethanen und Gemischen daraus.

12. Trommelbelag (20a-c) nach einem der Ansprüche 1 bis 10, **dadurch gekennzeichnet, dass** die erste Beschichtung (22) eine Dicke ($d_{22}$) im Bereich von 0,1 mm bis 3,0 mm aufweist.

## Claims

1. A drum cover (20a-c) for a drive drum (12, 14) of a corrugated cardboard machine (10), having a textile carrier layer (21) which has a first coating (22) on a first side and a second coating (23) on a second side, wherein the second coating (23) has a glass transition temperature according to DIN EN ISO 11357-2:2014-07 in the range of - 20°C to 60°C.

2. The drum cover (20a-c) according to Claim 1, **characterized in that** the second coating (23) contains at least one polymer, which is selected from the group consisting of polyacrylates, acrylate copolymers, acrylate terpolymers, rubbers, silicones, polyurethanes and mixtures thereof.

3. The drum cover (20a-c) according to Claim 2, **characterized in that** the polymer was produced by copolymerizing acrylic acid or a salt of the alkyl acid with an N-vinyl lactam or an N-vinyl acid amide and with at least one alkyl vinyl ether.

4. The drum cover (20a-c) according to any one of Claims 1 to 3, **characterized in that** the second coating (23) has a melting point of at least 180°C.

5. The drum cover (20a-c) according to any one of Claims 1 to 4, **characterized in that** the second coating (23) has a thickness ($d_{23}$) in the range of 0.1 mm to 0.5 mm.

6. The drum cover (20a-c) according to any one of Claims 1 to 5, **characterized in that** the second coating (23) has a weight per unit area in the range of 300 $g/m^2$ to 500 $g/m^2$.

7. The drum cover (20a-c) according to any one of Claims 1 to 6, **characterized in that** a cover layer (24) is applied to the second coating (23).

8. The drum cover (20a-c) according to any one of Claims 1 to 7, **characterized in that** said cover has a Shore A hardness according to DIN ISO 7619-1 of more than 50.

9. The drum cover (20a-c) according to any one of Claims 1 to 8, **characterized in that** the textile carrier layer (21) contains threads and/or fibers made of at least one polyester.

10. The drum cover (20a-c) according to any one of Claims 1 to 9, **characterized in that** the textile carrier layer (21) has a thickness $(d_{21})$ in the range of 1 mm to 9 mm.

11. The drum cover (20a-c) according to any one of Claims 1 to 10, **characterized in that** the first coating (22) contains at least one coating material selected from the group consisting of rubbers, silicones, polyurethanes and mixtures thereof.

12. The drum cover (20a-c) according to any one of Claims 1 to 10, **characterized in that** the first coating (22) has a thickness $(d_{22})$ in the range of 0.1 mm to 3.0 mm.

**Revendications**

1. Revêtement de tambour (20a-c) destinée à un tambour d'entrainement (12, 14) d'une machine à fabrication le carton ondulé (10), comprenant une couche support textile (21) qui présente un premier revêtement (22) sur un premier côté et un second revêtement (23) sur un second côté, le second revêtement (23) présentant une température de transition vitreuse selon DIN EN ISO 11357-2 : 2014-07 dans la plage de -20 °C à 60 °C.

2. Revêtement de tambour (20a-c) selon la revendication 1, **caractérisé en ce que** le second revêtement (23) contient au moins un polymère qui est choisi dans le groupe constitué des polyacrylates, des copolymères d'acrylates, des terpolymères d'acrylates, des caoutchoucs, des silicones, des polyuréthanes et de mélanges de ceux-ci.

3. Revêtement de tambour (20a-c) selon la revendication 2, **caractérisé en ce que** le polymère a été fabriqué par la copolymérisation d'acides acryliques ou d'un sel de l'acide alkyle avec un N-vinyl lactame ou un amide d'acide N-vinylique, ainsi qu'avec au moins un éther alkyl vinylique.

4. Revêtement de tambour (20a-c) selon l'une des revendications 1 à 3, **caractérisé en ce que** le second revêtement (23) présente une température de fusion d'au moins 180 °C.

5. Revêtement de tambour (20a-c) selon l'une des revendications 1 à 4, **caractérisé en ce que** le second revêtement (23) présente une épaisseur (d23) dans la plage de 0,1 mm à 0,5 mm.

6. Revêtement de tambour (20a-c) selon l'une des revendications 1 à 5, **caractérisé en ce que** le second revêtement (23) présente un grammage dans la plage de 300 g/m$^2$ à 500 g/m$^2$.

7. Revêtement de tambour (20a-c) selon l'une des revendications 1 à 6, **caractérisé en ce qu'**une couche de couverture (24) est rapportée sur le second revêtement (23).

8. Revêtement de tambour (20a-c) selon l'une des revendications 1 à 7, **caractérisé en ce qu'**il présente un degré de dureté Shore A selon DIN ISO 7619-1 supérieur à 50.

9. Revêtement de tambour (20a-c) selon l'une des revendications 1 à 8, **caractérisé en ce que** la couche support textile (21) contient des fils et/ou des fibres à base d'au moins un polyester.

10. Revêtement de tambour (20a-c) selon l'une des revendications 1 à 9, **caractérisé en ce que** la couche support textile (21) présente une épaisseur $(d_{21})$ dans la plage de 1 mm à 9 mm.

11. Revêtement de tambour (20a-c) selon l'une des revendications 1 à 10, **caractérisé en ce que** le premier revêtement (22) contient au moins un matériau de revêtement qui est choisi dans le groupe constitué des caoutchoucs, des silicones, des polyuréthanes et de mélanges de ceux-ci.

12. Revêtement de tambour (20a-c) selon l'une des revendications 1 à 10, **caractérisé en ce que** le premier revêtement (22) présente une épaisseur $(d_{22})$ dans la plage de 0,1 mm à 3,0 mm.

EP 3 741 910 B1

## Fig. 1

**Fig. 2**

20c

20b

20a

21

23

22

12

**Fig. 3**

20a

24

23

$d_{23}$

$d_{21}$

21

$d_{22}$

22

Fig. 4

EP 3 741 910 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018001395 A1
- JP H03310290 A

- WO 2007122708 A1
- DE 3423446 A1

**In der Beschreibung aufgeführte Nicht-Patentliteratur**

- **T.G. FOX.** *Bull. Am. Phys. Soc.,* 1956, vol. 1, 123